# EUROPEAN PATENT APPLICATION

(11) **EP 0 571 140 A1**
(43) Date of publication of application: **24.11.1993**
(21) Application number: 93303748.3
(22) Date of filing: 14.05.1993
(51) Int. Cl.: A47J 41/02

(54) **A container assembly**

(30) Priority: 22.05.1992 GB 9210921
(71) Applicant: THERMOS LIMITED, Brentwood, Essex CM15 9AY (GB)
(72) Inventor: Palmer, Thomas Albert, Chelmsford, Essex CM2 6UR (GB)
(74) Representative: Walters, Frederick James

(57) **Abstract**

A container assembly in the form of a vacuum flask has an insulating filler 1 retained in a housing 2 with the flask rim 6 in sealing engagement with a lower portion 22 of a ring seal 7 carried by a flange 30 of a seal seating formed on the housing 2. The top opening 4 of the housing 2 is closable by a stopper 40 which screw threadedly engages a neck 44 on the housing for a bung part 42 of the stopper to seal against an upper portion 21 of the ring seal 7. The ring seal 7 is a one piece moulding and serves to provide a seal between the housing 2 and the stopper 40 and also between the housing 2 and the filler 1.

## Description

### TECHNICAL FIELD & BACKGROUND ART

The present invention relates to a container assembly of the kind in which an open topped insulated container is retained within an open topped housing for their top openings to coincide so that contents of the insulated container are accessible through the open top of the housing.

In assemblies of the kind specified it is conventional to have a ring seal on a seal seating of the housing to provide an annular seal between the housing and an annular rim forming a mouth in the open top of the container. It is also known to provide a removable stopper which screw threadedly engages with the housing for a bung part of the stoppper to close the open top of the housing. Conventionally the stopper carries a sealing ring which abuts the housing to provide an annular seal between the stopper and housing so that, when the stopper is fitted firmly to the housing, leakage of contents from the insulated container is restrained by the seals which are formed between the rim of the container and housing and also between the stopper and the housing. An example of a known container assembly of the kind generally discussed above is a conventional vacuum flask for leisure ware in which the open topped container is in the form of a double walled vacuum insulated glass filler or bottle.

During assembly of the above described container assemblies the fitting of the sealing rings to the stopper and to the housing is a time consuming and therefore commercially expensive operation. Nevertheless it is considered essential that container assemblies of the kind discussed are resistant to leakage so that an efficient seal is necessary between the stopper and the housing and also between the rim of the insulated container and the housing and it is an object of the present invention to satisfy this requirement in a relatively simple and economical manner.

### STATEMENT OF INVENTION & ADVANTAGES

According to the present invention there is provided a container assembly comprising an open topped housing having a seal seating adjacent said open top; an open topped insulated container retained within the housing, the container having an annular rim forming a mouth in its open top, said mouth coinciding with the open top of the housing with the rim in sealing engagement with the housing; a removable stopper screw threadedly engaging the housing for a bung part of the stopper to close the open top of the housing; characterised in that a unified ring seal is carried by the seal seating, the ring seal having an upper portion against which the bung part of the stopper abuts to provide an annular seal between the bung part and the housing and a lower portion against which the container rim abuts to provide an annular seal between the container and the housing.

By the present invention it will be realised that a single ring seal carried by the seal seating adjacent the open top of the housing serves a double purpose in forming a seal between the rim of the insulated container and a seal between the container and the bung part of the stopper; as a consequence there is no necessity for a ring seal to be fitted to the stopper with a consequential saving in manufacturing, assembly and material costs.

The unified ring seal will usually be of a resilient or elastomeric material, typically silicone rubber, which yields under abutment from the stopper during its screw threaded engagement to form an efficient seal and also yields from abutment with the rim of the container, again to provide an efficient seal. Usually the container, particularly when in the form of a glass double walled vacuum insulated filler, will be biased within the housing to urge its rim into abutment with the ring seal.

### DRAWINGS

One embodiment of a container assembly in the form of a vacuum flask will now be described, by way of example only, with reference to the accompanying illustrative drawings, in which:-
Figure 1 is an axial section through the flask;
Figure 2 is a side elevation of a sealing ring which forms part of the flask, and
Figure 3 shows part of the sealing ring in Figure 2 in radial section taken on the line III-III.

### DETAILED DESCRIPTION OF DRAWINGS

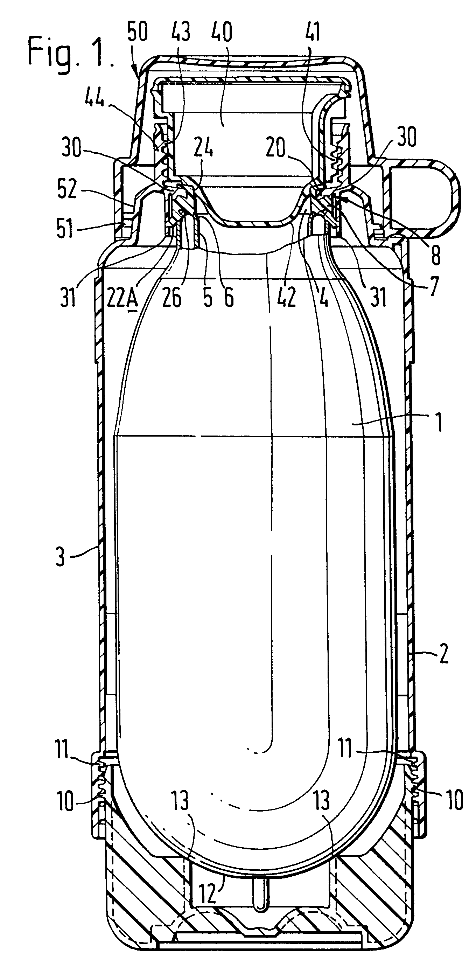

The major part of the construction of the flask assembly shown in Figure 1 will be readily apparent to those skilled in the art and, for convenience of discussion, may be regarded as conventional comprising a glass double walled vacuum insulated bottle or filler 1 retained within a generally cylindrical housing 2. The major part of the bottle 1 is accommodated within a plastics moulded upper housing part 3 which forms a circular top opening 4 to the housing 2. The top opening 4 communicates with a mouth 5 of the filler 1 through which contents of the filler may be poured. The mouth 5 is formed by an annular rim 6 of the filler 1 and engages with a sealing ring 7 fitted to a seal seating 8 that is moulded integrally with the housing part 3.

The housing 2 has a cup shaped plastics moulded base part 9 which is partly received within the lowermost open end of the housing part 3 to close the bottom of that housing part and to retain the filler 1 within the housing 2. The base part 9 has an external screw thread 10 which engages with a complementary internal screw thread 11 in the housing part 3 so that when the housing parts 3 and 9 are threadedly engaged, the base part 9 abuts the bottom 12 of the filler 1 (as indicated at 13) to bias the filler rim 6 into firm sealing engagement with the ring seal 7.

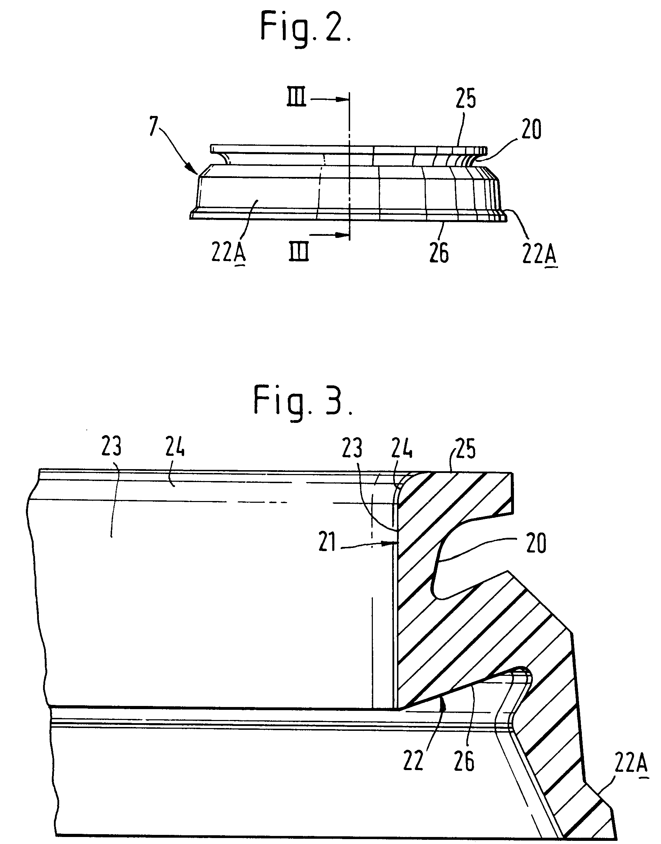

The ring seal 7 is formed as a one piece moulding in resilient or elastomeric material (of which silicone rubber is preferred) and is of generally annular form with a radial section as shown in Figure 3. More particularly the ring seal has a radially outwardly directed annular recess 20 adjacent to which is formed an upper sealing portion 21 and a lower sealing portion 22. The sealing portion 21 comprises an upper part of an internal cylindrical surface 23 of the sealing ring and a shoulder 24 presented upwardly between the cylindrical surface 23 and an annular end face 25 of the sealing ring. The lower sealing portion 22 presents a downwardly directed annular internal recess 26 which is located below the external annular recess 20 and partly formed by a downwardly extending peripheral skirt 22A of the sealing ring.

The seal seat 8 comprises a radially inwardly directed annular flange 30 and an axially downwardly extending cylindrical skirt 31 within which the filler rim 6 is axially received. The flange 30 and skirt 31 are moulded integral with the housing part 3. The sealing ring 7 is fitted to the seal seat 8 so that the annular flange 30 is received as a close interference fit within the annular recess 20 and the skirt 22A of the sealing ring is received closely within the cylindrical skirt 31 of the housing. The filler rim 6 is received within the recess 26 of the ring seal and the latter yields under compression from the axial biasing force exerted on the filler 1 (by the threaded engagement of the housing parts 3 and 9) for the lower portion 22 of the sealing ring to form an efficient seal with the rim 6 of the filler while the skirt 22A of the sealing ring is restrained from displacement radially outwardly by the housing skirt 31 (which also serves to secure the upper end of the filler 1 against radial displacement relative to the housing 2).

The flask assembly includes a stopper 40 having an external screw thread 41 and a bung part 42. The threads 41 of the stopper engage with a corresponding internal screw thread 43 moulded into a tubular neck 44 that is formed integral with the housing part 3. The neck 44 extends upwardly on the housing part adjacent to the seal seat 8 and is co-axial with the open top 4 of the housing.

During screw threaded engagement of the stopper 40 with the housing 2, the stopper bung part 42 moves into annular abutment with the shoulder 24 on the upper portion 21 of the ring seal causing the latter to yield and compress against the annular flange 20 and an efficient annular seal to be formed between the bung part 42 and the housing 2.

It will therefore be apparent that the ring seal 7 serves to provide an annular seal between the stopper 40 and the housing 2 and also between the filler rim 6 and the housing 2. As a consequence the stopper 40 may be formed from plastics moulded components which are easily assembled and without the necessity to fit a sealing ring to the stopper.

In Figure 1 there is shown an inverted drinking cup 50 which screw threadedly engages at 51 with a shoulder 52 on the housing part 3. Although it will be realised that the cup 50 has no relevance to the present invention, it is shown as typically being provided on a vacuum flask for leisure ware of the kind exemplified.

## Claims

1. A container assembly comprising an open topped housing having a seal seating adjacent said open top; an open topped insulated container retained within the housing, the container having an annular rim forming a mouth in its open top, said mouth coinciding with the open top of the housing with the rim in sealing engagement with the housing; a removable stopper screw threadedly engaging the housing for a bung part of the stopper to close the open top of the housing; characterised in that a unified ring seal is carried by the seal seating, the ring seal having an upper portion against which the bung part of the stopper abuts to provide an annular seal between the bung part and the housing and a lower portion against which the container rim abuts to provide an annular seal between the container and the housing.

2. An assembly as claimed in claim 1 in which the ring seal is substantially annular and has a radially outwardly directed annular recess within which is received a radially inwardly directed annular flange forming part of the seal seating of the housing.

3. An assembly as claimed in either claim 1 or claim 2 in which the lower portion of the ring seal has a downwardly directed annular recess within which downwardly directed annular recess the annular rim is received in sealing engagement.

4. An assembly as claimed in any one of the preceding claims in which the lower portion of the sealing ring has an external skirt that is received within a cylindrical surface presented by the housing, and wherein said cylindrical surface restrains the lower portion of the sealing ring from displacement radially outwardly and restrains the rim of the container from radial displacement relative to the housing.

5. An assembly as claimed in any one of the preceding claims in which the container is a double walled vacuum insulated filler.

6. An assembly as claimed in any one of the preceding claims in which the ring seal comprises silicone rubber.
